# FASCICULE DE BREVET EUROPEEN

(11) **EP 4 441 349 B1**
(45) Date de publication et mention de la délivrance du brevet: **22.04.2026**
(21) Numéro de dépôt: 22823472.0
(22) Date de dépôt: 30.11.2022
(51) Int. Cl.: F02C 3/06, F02K 3/06, F02K 3/077, F28D 7/00, F28D 7/08, F02C 7/14, F02C 7/18, F28F 7/02, F28F 13/08, F28D 21/00

(54) **ÉCHANGEUR DE CHALEUR AIR-HUILE**
LUFT-ÖL-WÄRMETAUSCHER
AIR-OIL HEAT EXCHANGER

(30) Priorité: 30.11.2021 EP 21211471; 14.12.2021 BE 202105983
(43) Date de publication de la demande: 09.10.2024
(73) Titulaire: Safran Aero Boosters SA, 4041 Herstal (BE)
(72) Inventeur: WEICKER, David, 1640 Rhode-Saint-Genèse (BE); CLEYET, Florian, 1640 Rhode-Saint-Genèse (BE); SERVAIS, Bruno, 4041 Herstal (BE)
(74) Mandataire: Ipsilon Luxembourg
(86) Numéro de dépôt international: PCT/EP2022/083838
(87) Numéro de publication internationale: WO 2023/099559

(56) Documents cités:
- EP-A2- 3 892 949
- US-A1- 2019 204 010
- US-A1- 2021 108 597
- US-B2- 10 502 502
- US-B2- 10 907 500

## Description

### Domaine

L'invention se rapporte au domaine des échangeurs de chaleur de turbomachine. Plus précisément, l'invention propose un échangeur de chaleur air/huile de turbomachine axiale.

### Art antérieur

Dans une turbomachine (turboréacteur), il est généralement nécessaire de refroidir l'huile du circuit de lubrification. A cet effet, il est connu de disposer un ou plusieurs échangeur(s) de chaleur dans le flux secondaire, c'est-à-dire en aval de la soufflante.

Cependant, la disposition d'un échangeur de chaleur au niveau du circuit secondaire pénalise la performance et le rendement global de la turbomachine. En effet, l'effort de poussée généré par la soufflante est en partie freiné par l'échangeur encombrant. De plus, des perturbations aérodynamiques du flux secondaire peuvent avoir lieu en-trainant des vibrations et des nuisances sonores.

Le document de brevet publié EP 3 674 531 A1 divulgue un échangeur de chaleur de type air-huile disposé dans la veine du flux secondaire d'une turbomachine. Un tel échangeur de chaleur génère des perturbations importantes au flux secondaire ayant une vitesse trop élevée pour que les pertes aérodynamiques ou de poussée soient négligeables.

Le document de brevet publié US 10,502,502 A1 divulgue un échangeur de chaleur obtenu par fabrication additive et comprenant des passages de fluide de plus petite taille.

L'état de l'art présente donc des inconvénients relatifs à des pénalités de performances. Auxquelles s'ajoute la contrainte liée à la fragilité de l'échangeur. En effet, celui-ci ne peut pas être placé dans une veine de flux tertiaire comprise radialement entre le flux primaire et le flux secondaire. Cependant, le risque de passage de débris et corps étrangers dans la veine de flux tertiaire est élevé, ce qui peut endommager l'échangeur de chaleur de chaleur.

### Résumé de l'invention

### Problème technique

L'invention a pour objectif de proposer un échangeur de chaleur qui minimise les pertes aérodynamiques induites par la présence de l'échangeur dans la veine du flux d'air. Aussi, l'invention vise également à améliorer l'échange thermique afin de garantir un refroidissement efficace dans un encombrement restreint sans entraver le rendement de la turbomachine.

### Solution technique

L'invention a trait à un échangeur de chaleur du type air/huile, pour une veine annulaire d'air d'une turbomachine, comprenant une zone d'échange thermique avec des passages d'huile et des surfaces d'échange thermique avec l'air, ladite zone d'échange thermique formant un passage d'air axial et présentant un profil en regard avec le flux d'air et compris dans un plan perpendiculaire audit flux d'air, ledit profil de la zone d'échange thermique étant en arc de cercle de manière à pouvoir être disposée dans la veine annulaire d'air, remarquable en ce que ledit échangeur de chaleur comprend sur une face radialement interne ou externe de la zone d'échange thermique, une arrivée d'huile et une sortie d'huile, les passages d'huile comprenant plusieurs trajets entre ladite arrivée d'huile et ladite sortie d'huile, répartis le long du profil en arc de cercle de la zone d'échange thermique.

Selon un mode avantageux de l'invention, chacun des trajets comprend au moins une portion aller et au moins une portion retour, s'étendant radialement entre la face radialement interne et la face radialement externe de la zone d'échange thermique.

Selon un mode avantageux de l'invention, chaque portion aller et chaque portion retour de chacun des trajets sont décalées le long du profil en arc de cercle de la zone d'échange thermique.

Selon un mode avantageux de l'invention, chacun des trajets comprend au moins une portion de connexion reliant l'au moins une portion aller à l'au moins une portion retour et disposée dans la zone d'échange thermique.

Selon un mode avantageux de l'invention, chacune des portions aller, retour et de connexion de chacun des trajets s'étendent sur une longueur totale axiale de la zone d'échange thermique.

Selon un mode avantageux de l'invention, chaque trajet comprend plusieurs passages d'huile parallèles répartis sur la longueur totale axiale de la zone d'échange thermique.

Selon un mode avantageux de l'invention, chaque portion aller et chaque portion retour de chacun des trajets comprend plusieurs passages d'huile parallèles formant un profil d'écoulement doublement coudé avec une première partie radiale, une deuxième partie axiale et une troisième partie radiale.

Selon un mode avantageux de l'invention, l'au moins une portion de connexion relie entre elles les premières ou troisièmes parties radiales adjacentes à ladite portion de connexion.

Selon un mode avantageux de l'invention, les deuxièmes parties axiales des portions aller et retour présentent des directions d'écoulement opposées.

Selon un mode avantageux de l'invention, l'échangeur de chaleur comprend sur la face radialement interne ou la face radialement externe de la zone d'échange thermique comprenant l'arrivée d'huile et la sortie d'huile, en outre, un distributeur disposé de manière fluidique entre l'arrivée d'huile et les trajets et s'étendant le long du profil en arc de cercle, et un collecteur disposé de manière fluidique entre les trajets et la sortie d'huile et s'étendant le long du profil en arc de cercle.

Selon un mode avantageux de l'invention, l'arrivée d'huile est à une extrémité du distributeur suivant le profil en arc de cercle et ledit distributeur présente une section de passage transversale audit profil en arc de cercle qui diminue progressivement le long dudit profil en arc de cercle depuis l'arrivée d'huile jusqu'à une extrémité opposée dudit distributeur.

Selon un mode avantageux de l'invention, la sortie d'huile est à une extrémité du collecteur suivant le profil en arc de cercle et ledit collecteur présente une section de passage transversale audit profil en arc de cercle qui diminue progressivement le long dudit profil en arc de cercle depuis la sortie d'huile jusqu'à une extrémité opposée dudit collecteur.

Selon un mode avantageux de l'invention, le distributeur et le collecteur sont côte-à-côte suivant une étendue axiale de la face radialement interne ou externe de la zone d'échange thermique comprenant l'arrivée d'huile et la sortie d'huile.

Selon un mode avantageux de l'invention, la hauteur totale radiale de la zone d'échange thermique augmente d'amont en avant, et le passage d'air axial comprend des canaux d'air délimités par les surfaces d'échange thermique et présentant des sections de passage augmentant d'amont en aval en correspondance avec la hauteur totale radiale de la zone d'échange thermique.

Selon un mode avantageux de l'invention, la hauteur totale radiale de la zone d'échange thermique et/ou les sections des canaux d'air augmentent d'amont en aval sur au moins 70% d'une étendue totale axiale de ladite zone d'échange thermique.

Selon un mode avantageux de l'invention, l'augmentation de la hauteur totale radiale de la zone d'échange thermique et/ou l'augmentation des sections des canaux d'air est monotone et/ou d'au moins 30%.

Selon un mode avantageux de l'invention, les sections des canaux d'air présentent une forme polygonale, préférentiellement hexagonale.

Selon un mode avantageux de l'invention, la zone d'échange thermique comprend des parois radiales réparties le long du profil en arc de cercle, et comprenant les passages d'huile, les surfaces d'échange thermique étant formées par des parois transversales s'étendant entre les parois radiales.

Selon un mode avantageux de l'invention, les canaux d'air entre chaque paire de parois radiales voisines forment au moins deux rangées radiales de polygones, préférentiellement d'hexagones, imbriqués.

Selon un mode avantageux de l'invention, les parois transversales sont intégralement formées avec les portions aller ou avec les portions retour.

Selon un mode avantageux de l'invention, l'échangeur de chaleur comprend, en outre, une paroi de profil en arc de cercle parallèle à, et radialement à distance de la zone d'échange thermique de manière à former, entre ladite paroi et ladite zone d'échange thermique, un passage de by-pass pour l'air, parallèle au passage d'échange thermique.

Selon un mode avantageux de l'invention, le passage de by-pass, en dehors de limites radiales et/ou latérales dudit passage de by-pass, est libre de matière.

Selon un mode avantageux de l'invention, le passage de by-pass présente une section s'étendant suivant l'arc de cercle avec une hauteur radiale préférentiellement constante.

Selon un mode avantageux de l'invention, le passage de by-pass s'étend radialement sur une hauteur comprise entre 10% et 20% d'une hauteur radiale cumulée dudit passage de by-pass et de la zone d'échange thermique.

Selon un mode avantageux de l'invention, le passage de by-pass s'étend sur une étendue totale de l'échangeur de chaleur suivant une direction d'écoulement de l'air.

### Avantages de l'invention

L'invention est particulièrement avantageuse en ce qu'elle permet de garantir un échange thermique efficace dans un encombrement réduit tout en évitant d'entraver le rendement du moteur ce qui se traduit par une efficacité énergétique et une poussée optimisée qui permet avantageusement de réduire les émissions des gaz carboniques.

### Description des dessins

[Fig.1] est une vue partielle en perspective de l'échangeur selon un premier mode de réalisation ;
[Fig.2] illustre une vue en coupe de l'échangeur selon un deuxième mode de réalisation ;
[Fig.3] représente des trajets d'huile dans l'échangeur selon un troisième mode de réalisation ;
[Fig.3a] illustre une vue d'en-dessous en perspective des trajets d'huile selon le troisième mode de réalisation ;
[Fig.4] représente un trajet d'huile dans l'échangeur selon un quatrième mode de réalisation ;
[Fig.5] illustre une vue en coupe de l'échangeur disposé dans la veine d'air annulaire et selon le deuxième mode de réalisation ;
[Fig.6] représente une portion agrandie « A » de la zone d'échange thermique de la [Fig.2].

### Description d'un mode de réalisation

Dans la description qui va suivre, les termes « interne » et « externe » renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement d'un flux dans la turbomachine.

Les figures montrent les éléments de manière schématique et ne sont pas représentées à l'échelle. En particulier, certaines dimensions sont agrandies pour faciliter la lecture des figures.

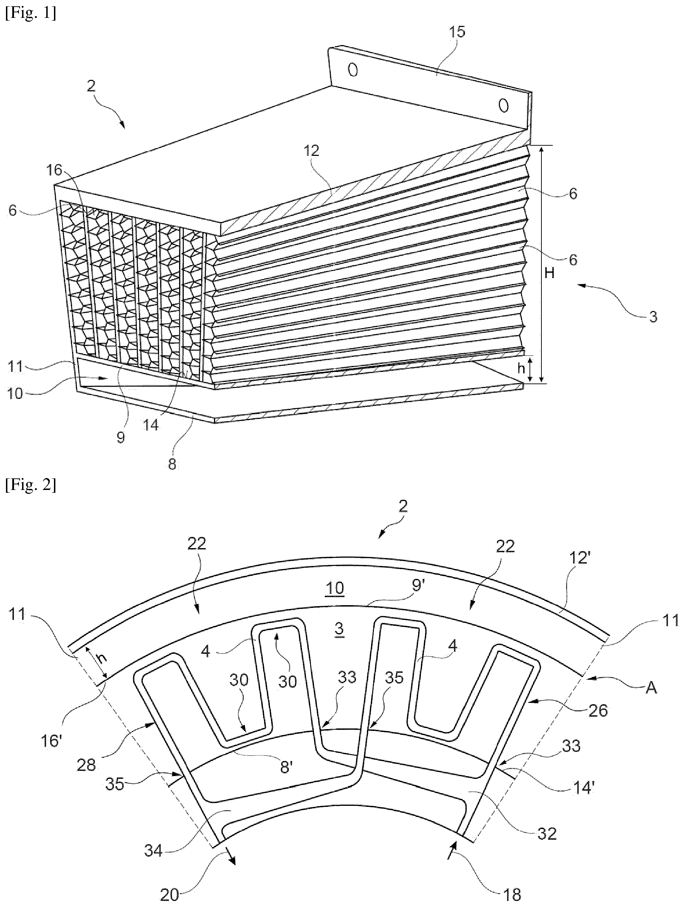

La [Fig.1] illustre vue partielle en perspective d'un échangeur de chaleur 2 selon un premier mode de réalisation. Il est à noter qu'une vue en perspective de l'échangeur de chaleur 2 est censée avoir un profil en arc de cercle, cependant la [Fig.1] a été fortement simplifiée afin de faciliter la compréhension.

L'échangeur de chaleur 2 est du type air/huile, configuré pour être monté dans une veine d'air annulaire d'une turbomachine axiale. De préférence, la turbomachine axiale est une turbomachine à trois flux, et la veine d'air annulaire est de préférence une veine annulaire de flux tertiaire.

En référence à la [Fig.1], l'échangeur 2 comprend une zone d'échange thermique 3 ayant des passages d'huile 4 et des surfaces d'échange thermique 6 formant un passage d'échange thermique pour le flux d'air F.

Préférentiellement, l'échangeur 2 est une pièce monobloc obtenue par fabrication additive, et plus préférentiellement obtenu par fusion laser sur un lit de poudre en aluminium. À cet effet, les passages d'huile 4 sont formés par des canaux tubulaires permettant la circulation d'huile et les surfaces d'échanges 6 sont préférentiellement formées par des parois ou plaques de faible épaisseur, et avantageusement, chaque plaque délimite deux surfaces d'échange 6.

La zone d'échange thermique 3 est radialement délimitée par une paroi supérieure 12 et par une paroi inférieure 9, les passages d'huile s'étendent radialement et axialement entre lesdites paroi supérieure 12 et paroi inférieure 9.

En effet, l'échangeur de chaleur 2 de la présente invention est de type « ACOC », acronyme de l'expression anglaise « Air-Cooled Oil Cooler », ce dernier est différent d'un échangeur air-huile surfacique « SACOC », dans lequel l'huile reste dans les parois inférieure et supérieure et ne traverse pas radialement l'échangeur.

Avantageusement, la zone d'échange thermique 3 présente un profil en regard avec le flux d'air et compris dans un plan perpendiculaire audit flux d'air, ledit profil de la zone d'échange thermique 3 étant en arc de cercle permettant à l'échangeur 2 de pouvoir être disposé dans la veine annulaire d'air, notamment grâce à une paroi 8 de l'échangeur 2, dite paroi intérieure 8 et qui est située radialement à l'intérieur de la zone d'échange thermique 3, de manière à former une paroi de guidage radialement interne 8 de la veine d'air annulaire.

La paroi intérieure 8 permet de former un passage de by-pass pour l'air 10 qui est parallèle au passage d'échange thermique entre la paroi intérieure 8 et la zone d'échange thermique 3.

Dans cette configuration, l'échangeur 2 comprend une paroi extérieure 12 radialement et adjacente à la zone d'échange thermique 3, ladite paroi extérieure 12 comprend à au moins une extrémité amont ou aval une bride de fixation 15 de manière à pouvoir se fixer à un carter amont ou aval de la veine d'air annulaire, le carter est de préférence un carter externe au flux d'air F ayant les parties amont et aval fixées à l'échangeur 2.

Le passage de by-pass pour l'air 10 est délimité radialement par deux limites radiales présentant un profil en arc de cercle et constituées de la paroi intérieure 8 et une paroi radiale 9, cette dernière est la délimitation radiale inférieure de la zone d'échange thermique 3.

Le passage de by-pass pour l'air 10 est libre de matière entre ses deux limites radiales 8, 9 et/ou ses deux limites latérales 11 dont une n'est pas illustrée dans la [Fig.1] due à la coupe réalisée. Les deux limites latérales 11 sont principalement perpendiculaires aux limites radiales 8, 9, formant ainsi le passage de by-pass pour l'air 10 présentant une section transversale au flux d'air F et qui est rectangulaire incurvée suivant le profil en arc de cercle.

Le passage de by-pass pour l'air 10 est communément appelé by-pass d'air 10, et peut aussi être appelé bypass « FOD », acronyme de l'expression anglaise « Foreign Object Debris ». En effet, le by-pass d'air 10 s'étend longitudinalement sur une étendue totale de l'échangeur 2, son rôle principal est de permettre le passage de débris contenu dans le flux d'air F à travers la veine annulaire de la turbomachine. Les débris ou « FOD » peuvent par exemple être des oiseaux, la grêle, les grêlons ou tout autre objet pouvant obstruer ou endommager l'échangeur.

En parallèle du by-pass d'air 10, une grille de protection peut être mise sur une face avant de l'échangeur 2 pour protéger davantage les passages d'huile 4 et les surfaces d'échange 6, et cela sans entraver leur capacité d'échange thermique.

Le by-pass d'air 10 s'étend radialement sur une hauteur h comprise entre 10% et 20% d'une hauteur radiale cumulée H dudit passage de by-pass et de la zone d'échange thermique. De préférence, la hauteur du by-pass d'air 10 s'étend radialement à au maximum 15% de la hauteur radiale cumulée H.

La hauteur radiale h du by-pass d'air 10 est constante sur l'étendue totale de l'échangeur 2 suivant le flux d'air F. En effet, la hauteur h n'évolue nullement suivant l'écoulement de l'air car il n'est pas souhaité de modifier la vitesse de celui-ci, uniquement le passage des débris est attendu du by-pass d'air 10. Cependant, la hauteur h peut présenter une petite variation d'au maximum 1% de la valeur h, qui peut être relative à la précision de fabrication.

Avantageusement, la constance de la hauteur h permet de limiter la différence de pertes de charge entre le by-pass d'air 10 et la zone d'échange thermique 3. Cependant, la hauteur radiale h du by-pass d'air 10 peut légèrement varier afin de compenser des éventuelles pertes de charges qui peuvent être causées par des perturbations aérodynamiques en aval de l'échangeur 2. À cet égard, le by-pass d'air 10 peut présenter une section longitudinale convergente et/ou divergente.

Selon le premier mode de réalisation illustré dans la [Fig.1], la zone d'échange thermique 3 est radialement délimitée par une face radialement interne 14 appartenant à la paroi radiale 9, et une face radialement externe 16 appartenant à la paroi extérieure 12.

Préférablement, l'échangeur 2 comprend une arrivée d'huile et une sortie d'huile sur la face radialement interne 14.

Les passages d'huile 4 comprennent plusieurs trajets entre une arrivée d'huile et une sortie d'huile, lesdits trajets s'étendant radialement extérieurement à la face radialement interne 14, et qui sont répartis le long du profil en arc de cercle de la zone d'échange thermique 3.

La zone d'échange thermique 3 peut comprendre une divergence circonférentielle dans sa partie aval, i.e. la section circonférentielle de la zone d'échange thermique 3 augmente d'amont en aval, permettant aux passages d'huiles 4 d'être répartis circonférentiellement dans l'échangeur 2 entre l'arrivée d'huile et la sortie d'huile tout en évitant de traverser le by-pass d'air.

La [Fig.2] illustre une vue en coupe de l'échangeur 2 selon un deuxième mode de réalisation, illustrant de manière schématique les trajets d'huile.

En effet, le deuxième mode de réalisation consiste à positionner le by-pass d'air 10 dans une position radialement haute de façon à ce que ledit by-pass d'air 10 soit adjacent au carter externe de la turbomachine. Alors que le premier mode de réalisation consiste à positionner le by-pass d'air 10, ayant la même configuration géométrique que ce qui est décrit précédemment, comme étant adjacent à un carter interne de la turbomachine.

À cet égard, et en référence à la [Fig.2], l'échangeur 2 comprend une paroi extérieure 12' située radialement à l'extérieur de la zone d'échange thermique 3, de manière à former une paroi de guidage radialement externe de la veine d'air annulaire.

Similairement à la paroi extérieure 12 de la [Fig.1], la paroi extérieure 12' de la [Fig.2] peut également comprendre une bride de fixation pour fixer l'échangeur à un carter externe de la turbomachine.

Dans cette configuration, le by-pass d'air 10 est délimité radialement par deux limites radiales constituées de la paroi extérieure 12' et d'une paroi radiale 9' délimitant radialement extérieurement la zone d'échange thermique 3. À cet effet, la hauteur radiale h du by-pass d'air 10 est comprise entre la paroi radiale 9' et la paroi extérieure 12.

L'échangeur 2 comprend, en outre, une paroi intérieure 8', disposée radialement intérieurement et adjacente à la zone d'échange thermique 3. À cet effet, la paroi intérieure 8' comprend à au moins une extrémité amont ou aval ou circonférentielle, une bride de fixation de manière à pouvoir se fixer à un carter amont ou aval de la veine d'air annulaire, ledit carter est de préférence un carter interne au flux d'air ayant les parties amont et aval fixées à l'échangeur 2.

Dans cette configuration, l'échangeur 2 est configuré pour faire intégralement partie des carters interne et externe de la turbomachine et d'assurer une continuité aérodynamique de la veine d'air annulaire.

Avantageusement, l'échangeur 2 peut être fabriqué et adapté selon l'architecture de la turbomachine dans laquelle il sera monté afin d'anticiper la partie radiale de la veine d'air annulaire qui comprend le plus de risques d'impact avec les débris « FOD » pour que le by-pass d'air 10 y soit agencé.

La [Fig.2] illustre également la zone d'échange thermique 3 comme étant radialement délimitée par une face radialement interne 14' appartenant à la paroi intérieure 8', et une face radialement externe 16' appartenant à la paroi radiale 9'.

Préférablement, l'échangeur 2 comprend une arrivée d'huile 18 et une sortie d'huile 20 sur la face radialement interne 14'. Cependant, l'échangeur 2 peut comprendre l'arrivée et la sortie d'huile 18, 20 sur la face radialement externe 16'.

Les passages d'huile 4 comprennent plusieurs trajets 22 entre l'arrivée d'huile 18 et la sortie d'huile 20 et qui sont répartis le long du profil en arc de cercle de la zone d'échange thermique 3. L'échangeur 2 peut comprendre un seul trajet d'huile comme il peut comprendre plusieurs trajets allant jusqu'à 10 trajets d'huile.

Chacun des trajets 22 comprend au moins une portion aller 26 et au moins une portion retour 28, les termes « aller » et « retour » correspondent au sens d'écoulement radial principal de l'huile dans les passages d'huile 4. À cet égard, la portion aller 26 correspond à une portion du trajet d'huile 22 dans laquelle l'huile s'écoule radialement du bas vers le haut. Similairement, la portion retour 28 correspond à une portion du trajet d'huile 22 dans laquelle l'huile s'écoule radialement du haut vers le bas.

Les deux portions aller 26 et retour 28 sont décalées le long du profil en arc de cercle de la zone d'échange thermique 3, et s'étendent radialement entre la face radialement interne 14' et la face radialement externe 16' de la zone d'échange thermique. De plus, chacun des trajets 22 comprend au moins une portion de connexion 30 reliant l'au moins une portion aller 26 à l'au moins une portion retour 28.

Avantageusement, comme on peut le voir sur la [Fig.2], le décalage circonférentiel le long du profil en arc de cercle de la zone d'échange thermique 3 assuré par la portion de connexion 30 entre la portion aller 26 et la portion retour 28 permet d'augmenter circonférentiellement le parcours de l'huile dans l'échangeur. A cet effet, le flux d'air est perpendiculaire au parcours de l'huile, et l'échange thermique est maximisé.

La face radialement interne 14' comprend en outre un distributeur 32 disposé de manière fluidique entre l'arrivée d'huile 18 et les trajets 22 et s'étendant le long du profil en arc de cercle, et un collecteur 34 disposé de manière fluidique entre les trajets 22 et la sortie d'huile 20 et s'étendant le long du profil en arc de cercle.

L'arrivée d'huile 18 est à une extrémité du distributeur 32 suivant le profil en arc de cercle et présentant une section de passage transversale audit profil en arc de cercle qui diminue progressivement le long de ce dernier depuis l'arrivée d'huile 18 jusqu'à une extrémité opposée du distributeur 32.

Similairement, la sortie d'huile 20 est à une extrémité du collecteur 34 suivant le profil en arc de cercle et présentant une section de passage transversale audit profil en arc de cercle qui diminue progressivement le long de ce dernier depuis la sortie d'huile 20 jusqu'à une extrémité opposée du collecteur 34.

Préférentiellement, le distributeur 32 et le collecteur 34 sont côte-à-côte suivant une étendue axiale de la face radialement interne 14' de la zone d'échange thermique 3.

La présente invention présente deux variantes différentes concernant les trajets d'huile. Les troisième et quatrième modes de réalisation qui vont être décrits concernent des variantes du trajet d'huile, étant entendu que chacun de ces troisième et quatrième modes de réalisation peut s'appliquer soit au premier mode ou au deuxième mode. En effet, on peut choisir une position radiale haute ou basse du by-pass d'air et parallèlement définir le mode de réalisation du trajet d'huile souhaité.

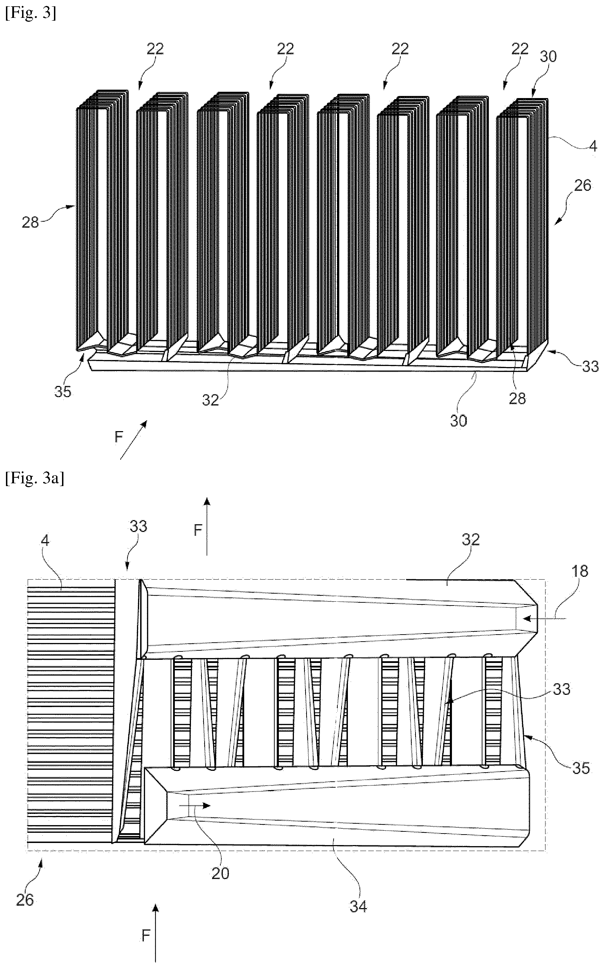

La [Fig.3] illustre les trajets d'huile 22 tel que décrits précédemment, dans l'échangeur selon le troisième mode de réalisation, et dans lequel, chacune des portions aller 26, retour 28 et de connexion 30 de chacun des trajets 22 s'étendent sur une longueur totale axiale de la zone d'échange thermique.

Chaque trajet 22 comprend plusieurs passages d'huile 4 parallèles répartis sur la longueur totale axiale de la zone d'échange thermique. Plus précisément, les passages d'huile 4 s'étendent axialement sur la majorité de la longueur axiale des surfaces d'échanges thermiques. De préférence, le nombre de passages d'huile 4 est compris entre 5 et 30 passages d'huile 4, et plus préférentiellement, entre 10 et 25 passages d'huile 4.

La [Fig.3a] illustre une vue d'en-dessous en perspective des trajets d'huile de la [Fig.3] qui sont selon le troisième mode de réalisation de l'invention.

À cet effet, le distributeur 32 permet d'alimenter les passages d'huile 4 qui sont compris dans les portions aller 26, et la liaison entre le distributeur 32 et lesdites portions aller 26 est réalisé au moyen d'un passage d'entrée d'huile 33.

Préférentiellement, chaque passage d'entrée d'huile 33 fait partie intégrante des passages d'huile 4, et comprend une section de passage transversale au flux d'air F et qui diminue progressivement le long de ce dernier.

Avantageusement, la diminution de la section transversale du passage d'entrée d'huile 33 permet de réduire les pertes de charge.

Similairement, le collecteur 34 permet de récupérer l'huile sortant des passages d'huile 4 qui sont compris dans les portions retour 28 au moyen d'un passage de sortie d'huile 35.

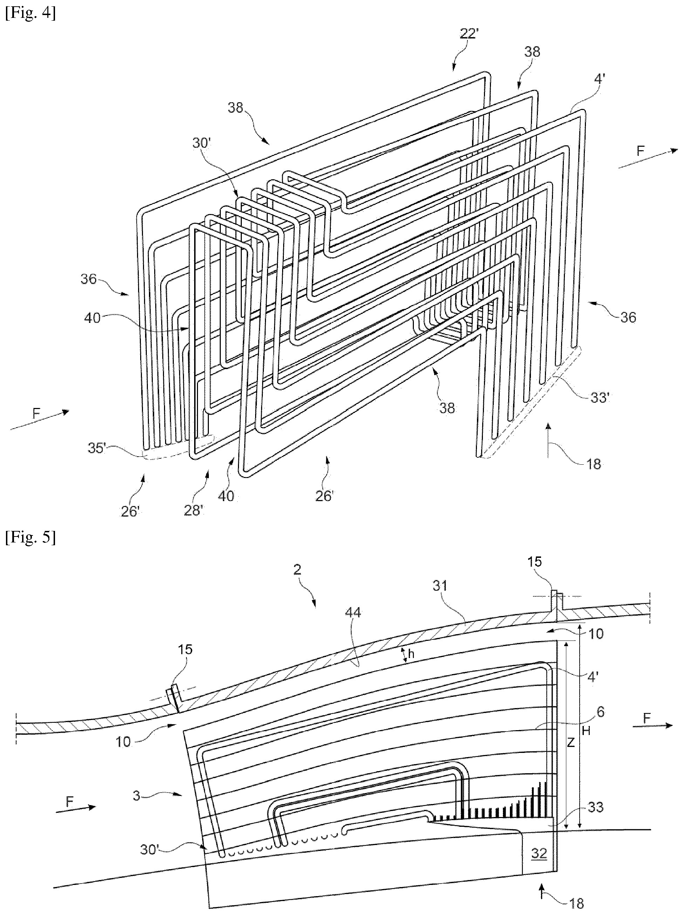

La [Fig.4] représente un trajet d'huile 22' dans l'échangeur selon un quatrième mode de réalisation. De préférence, l'échangeur comprend une pluralité de trajets d'huile similaires au trajet d'huile 22'.

Le trajet d'huile 22' comprend plusieurs passages d'huile 4' qui sont formés par des canaux tubulaires parallèles et formant une portion aller 26' et une portion retour 28'. Chacune des portions aller 26' et retour 28' forme un profil d'écoulement de l'huile qui est doublement coudé avec une première partie radiale 36, une deuxième partie axiale 38 et une troisième partie radiale 40.

L'échangeur selon le quatrième mode de réalisation peut comprendre une pluralité de trajets d'huile 22'. À cet égard, chaque trajet d'huile 22' peut être directement lié au distributeur 32' et au collecteur 34' ainsi qu'au passages d'entrée d'huile 33' et aux passages de sorties d'huile 35' qui sont identiques à ceux décrits précédemment pour le troisième mode de réalisation.

Dans le sens de l'écoulement de l'huile, i.e. du passage d'entrée d'huile 33 au passage de sortie d'huile 35, les parties aller 26' et les parties retour 28' sont reliées entre elles via une portion de connexion 30'. Précisément, ladite portion de connexion 30' permet de relier deux troisièmes parties radiales 40 chacune étant appartenant à la partie aller 26' et l'autre à la partie retour 28'.

Similairement et dans le même sens d'écoulement de l'huile, les parties retour 28' sont reliées aux parties aller 26' au moyen de la portion de connexion (non illustrée dans la [Fig.4]). Précisément, ladite portion de connexion permet de relier deux premières parties radiales 36 chacune étant appartenant à la partie retour 28' et l'autre à la partie aller 26'.

La [Fig.4] illustre une seule partie retour 28', cependant, chaque trajet d'huile 22' peut comprendre plusieurs parties retour 28' et plusieurs parties aller 26'. Préférentiellement, le trajet d'huile 22' comprend deux parties aller 26' et deux parties retour 28'.

Les deuxièmes parties axiales des portions aller 26' et retour 28' présentent des directions d'écoulement opposées. À cet effet, la deuxième partie axiale 38 de la portion retour 28' comprend l'huile qui est dans une première direction d'écoulement axiale opposée à la deuxième partie axiale 38 de la portion aller 26', la direction d'écoulement de cette dernière est particulièrement opposée au flux d'air F.

Dans cette configuration, l'échange thermique entre les passages d'huile 4' et l'air est en partie réalisé en contre-courant. Avantageusement, cela permet un échange thermique par convection plus efficace entre les passages d'huile 4' et le flux d'air F, cela permet concrètement de minimiser la longueur du parcours de l'huile dans les passages d'huile 4' de l'échangeur, ce qui permet de réduire l'encombrement et le poids de l'échangeur dans la turbomachine.

Préférentiellement, le quatrième mode de réalisation de l'invention est utilisé dans le cas où l'étendue axiale totale de la zone d'échange thermique est supérieure à l'étendue radiale totale de cette dernière. Avantageusement, cela permet de maximiser l'échange thermique en contre-courant avec le flux d'air.

L'échangeur de l'invention présente une zone d'échange thermique étant préférentiellement divergente dans la direction radiale et suivant le sens de l'écoulement de l'air.

Avantageusement, la divergence de la zone d'échange thermique permet de limiter les pertes de charges au sein de l'échangeur et d'améliorer l'échange thermique entre l'air et l'huile parcourant les passages d'huile 4'.

La [Fig.5] illustre une vue en coupe de l'échangeur 2 selon le deuxième mode de réalisation, l'échangeur 2 étant disposé dans la veine d'air annulaire.

Les passages d'huiles 4' illustrés dans la [Fig.5] appartiennent au quatrième mode de réalisation de l'invention. Cependant, la divergence de l'échangeur 2 ne se limite pas à ce dernier mode particulièrement, et les passages d'huiles 4 illustrés aux figures 3 et 3a représentant le troisième mode de réalisation peuvent également être utilisés dans la [Fig.5].

En référence à la [Fig.5], la hauteur totale radiale Z de la zone d'échange thermique 3 augmente d'amont en avant, et le passage d'air axial comprend des canaux d'air 5 délimités par les surfaces d'échange thermique 6 et présentant des sections de passage augmentant d'amont en aval en correspondance avec la hauteur totale radiale Z de la zone d'échange thermique 3.

La hauteur totale radiale Z de la zone d'échange thermique 3 et/ou les sections des canaux d'air 5 augmentent d'amont en aval sur au moins 70% d'une étendue totale axiale de ladite zone d'échange thermique 3. Préférentiellement, les sections des canaux d'air 5 augmentent d'amont en aval sur toute l'étendue totale axiale de la zone d'échange thermique 3.

L'augmentation de la hauteur totale radiale Z de la zone d'échange thermique 3 et/ou l'augmentation des sections des canaux d'air 5 est monotone et/ou d'au moins 30%. Préférentiellement, l'augmentation des sections des canaux d'air 5 est monotone et d'au moins 50%.

De préférence, l'échangeur 2 comprend plusieurs secteurs angulaires, chaque secteur angulaire comprenant l'arrivée d'huile 18 et la sortie d'huile, ladite arrivée d'huile et/ ou ladite sortie d'huile est intégralement formée dans la paroi intérieure, et au moins un des secteurs comprend un passage de mise en court-circuit (non-illustré) dudit secteur, également appelé by-pass d'huile, s'étendant de manière fluidique entre l'arrivée d'huile 18 et la sortie d'huile le long de la paroi intérieure.

Avantageusement, le by-pass d'huile permet d'assurer le fonctionnement à froid de l'échangeur 2, notamment à des températures avoisinant les -40°C, en effet, l'huile froide présente une viscosité élevée qui ne convient pas pour permettre son passage dans l'échangeur 2, l'huile passe donc dans le by-pass d'huile jusqu'à ce qu'elle atteigne une viscosité convenable.

À cet égard, un autre circuit appelé circuit de décongélation (non-illustré) peut être agencé à proximité ou en contact du by-pass d'huile, et peut être également en contact avec les passages d'huile 4', le circuit de décongélation peut assurer le réchauffement de l'huile comprise dans l'échangeur 2.

Le by-pass d'huile comprend un clapet normalement fermé et apte à s'ouvrir en présence d'une différence de pression entre l'arrivée d'huile 18 et la sortie d'huile, supérieure ou égale à une valeur limite. Le clapet peut également s'ouvrir quand la viscosité de l'huile est trop élevée par rapport à un seuil préalablement identifié.

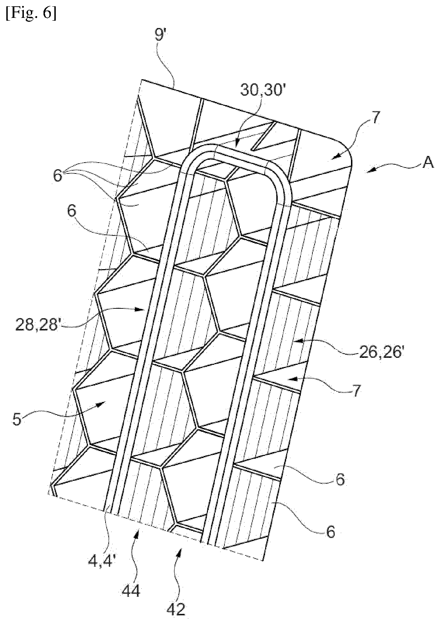

La [Fig.6] représente une portion agrandie A de la zone d'échange thermique identifiée dans la [Fig.2].

La portion agrandie A est légèrement en perspective pour faciliter sa description et montre les passages d'huiles 4 selon le troisième mode de réalisation de l'invention ou les passages d'huiles 4' selon le quatrième mode de réalisation.

Les canaux d'air 5 sont délimités par les surfaces d'échange 6 et la portion aller 26, 26' ou la portion retour 28, 28'. Les sections des canaux d'air 5 présentent une forme polygonale et préférentiellement pentagonale. Plus préférentiellement, chaque canal d'air 5 est délimité par quatre plaques présentant quatre surfaces d'échanges 6 et une portion aller 26, 26' ou une portion retour 28, 28' et deux surfaces d'échange 6 sur les quatre appartenant à des plaques transversales intégralement formées avec les passages d'huiles 4, 4' des portions aller 26, 26' ou des portions retour 28, 28'.

À cet effet, les passages d'huiles 4, 4' peuvent être formé par un évidement de matière dans une plaque ou un panneau, et les portions aller et retour peuvent être comprises dans un panneau radial.

Les canaux d'air 5 entre chaque paire de portions aller 26, 26' et portions retour 28, 28' voisines forment au moins deux rangées radiales 42, 44 de polygones, préférentiellement de pentagone, imbriqués. Le nombre de rangées radiales 42, 44 peut dépendre de la distance circonférentielle entre la portion aller 26, 26' et la portion retour 28, 28'.

La zone d'échange thermique comprend en outre, des plaques de bord 7 présentant les surfaces d'échange 6, en effet, les plaques de bords 7 sont similaires aux plaques présentant les surfaces d'échange 6 de la zone d'échange thermique.

Avantageusement, les plaques de bord 7 permettent de garantir un échange thermique aux bords de la zone d'échange thermique tout en générant une perte de charge constante par rapport au reste de ladite zone d'échange thermique, cela permet de minimiser les perturbations aérodynamiques du flux d'air dans la veine annulaire.

L'échangeur de l'invention et selon quelconque des modes de réalisation précédemment décrits, peut s'étendre de manière continue sur 360° dans un tronçon de la veine d'air annulaire autour de l'axe longitudinal de la turbomachine. Préférentiellement, l'échangeur s'étend de manière discontinue sur 360° autour de l'axe longitudinal en se subdivisant en plusieurs segments angulaires et chaque échangeur peut assurer une fonction d'échange thermique entre l'air et l'huile qui peut être différente d'un segment à un autre.

En effet, chaque peut combiner le refroidissement de plusieurs fonctions ou circuits d'huile de la turbomachine, et cela en fonction de différents paramètres liées au besoin de refroidissement de l'huile, i.e. températures d'entrée, débits, température de sortie demandée ou les conditions de l'air, les différents circuits peuvent être mis en contact thermique ou bien isolés.

À cet égard, l'échangeur peut assurer le refroidissement de l'huile utilisée dans plusieurs composant de l'aéronef, notamment, un moteur, une boîte de vitesse, une génératrice moteur et tout composant électronique nécessitant un refroidissement.

Avantageusement, l'échangeur et en particulier les passages d'huile peuvent supporter une température basse de l'huile pouvant atteindre -54°C, et parallèlement supporter une haute température d'huile allant jusqu'à 180°C avec un débit atteignant les 30000 l/h.

Il est à noter que l'invention ne se limite pas aux seuls exemples décrits sur les figures. Les enseignements de la présente invention peuvent notamment être applicables à un autre type de turbomachine.

Chaque caractéristique technique de chaque exemple illustré est applicable aux autres exemples. Notamment, la combinaison du troisième ou quatrième mode de réalisation avec le premier ou le deuxième mode de réalisation.

## Revendications

1. Échangeur de chaleur (2) du type air/huile, pour une veine annulaire d'air d'une turbomachine, comprenant une zone d'échange thermique (3) avec des passages d'huile (4, 4') et des surfaces d'échange thermique (6) avec l'air, ladite zone d'échange thermique (3) formant un passage d'air axial et présentant un profil en regard avec le flux d'air (F) et compris dans un plan perpendiculaire audit flux d'air (F), ledit profil de la zone d'échange thermique (3) étant en arc de cercle de manière à pouvoir être disposée dans la veine annulaire d'air, ledit échangeur de chaleur (2) comprenant sur une face radialement interne (14, 14') ou externe (16, 16') de la zone d'échange thermique (3), une arrivée d'huile (18) et une sortie d'huile (20), les passages d'huile (4, 4') comprenant plusieurs trajets (22, 22') entre ladite arrivée d'huile (18) et ladite sortie d'huile (20), répartis le long du profil en arc de cercle de la zone d'échange thermique (3), chacun des trajets (22, 22') comprenant au moins une portion aller (26, 26') et au moins une portion retour (28, 28'), s'étendant radialement entre la face radialement interne (14, 14') et la face radialement externe (16, 16'), ledit échangeur de chaleur étant **caractérisé en ce que** chaque portion aller (26, 26') et chaque portion retour (28, 28') de chacun des trajets (22, 22') sont décalées le long du profil en arc de cercle de la zone d'échange thermique (3).

2. Échangeur de chaleur (2) selon la revendication 1, **caractérisé en ce que** chacun des trajets (22, 22') comprend au moins une portion de connexion (30, 30') reliant l'au moins une portion aller (26, 26') à l'au moins une portion retour (28, 28') et disposée dans la zone d'échange thermique (3).

3. Échangeur de chaleur (2) selon l'une des revendications 1 et 2, **caractérisé en ce que** chacune des portions aller (26), retour (28) et de connexion (30) de chacun des trajets (22) s'étendent sur une longueur totale axiale de la zone d'échange thermique (3).

4. Échangeur de chaleur (2) selon la revendication 3, **caractérisé en ce que** chaque trajet (22) comprend plusieurs passages d'huile (4) parallèles répartis sur la longueur totale axiale de la zone d'échange thermique (3).

5. Échangeur de chaleur (2) selon l'une des revendications 1 et 2, **caractérisé en ce que** chaque portion aller (26') et chaque portion retour (28') de chacun des trajets (22') comprend plusieurs passages d'huile (4') parallèles formant un profil d'écoulement doublement coudé avec une première partie radiale (36), une deuxième partie axiale (38) et une troisième partie radiale (40).

6. Échangeur de chaleur (2) selon les revendications 2 et 5, **caractérisé en ce que** l'au moins une portion de connexion (30') relie entre elles les premières (36) ou troisièmes parties radiales (40) adjacentes à ladite portion de connexion (30').

7. Échangeur de chaleur (2) selon l'une des revendications 5 et 6, **caractérisé en ce que** les deuxièmes parties axiales (38) des portions aller (26') et retour (28') présentent des directions d'écoulement opposées.

8. Échangeur de chaleur (2) selon l'une des revendications 1 à 7, comprenant sur la face radialement interne (14, 14') ou la face radialement externe (16, 16') de la zone d'échange thermique (3) comprenant l'arrivée d'huile (18) et la sortie d'huile (20), en outre, un distributeur (32) disposé de manière fluidique entre l'arrivée d'huile (18) et les trajets (22, 22') et s'étendant le long du profil en arc de cercle, et un collecteur (34) disposé de manière fluidique entre les trajets (22, 22') et la sortie d'huile (20) et s'étendant le long du profil en arc de cercle et préférentiellement l'arrivée d'huile (18) est à une extrémité du distributeur (32) suivant le profil en arc de cercle et ledit distributeur présente une section de passage transversale audit profil en arc de cercle qui diminue progressivement le long dudit profil en arc de cercle depuis l'arrivée d'huile (18) jusqu'à une extrémité opposée dudit distributeur (32).

9. Échangeur de chaleur (2) selon la revendication 8, **caractérisé en ce que** la sortie d'huile (20) est à une extrémité du collecteur (34) suivant le profil en arc de cercle et ledit collecteur (34) présente une section de passage transversale audit profil en arc de cercle qui diminue progressivement le long dudit profil en arc de cercle depuis la sortie d'huile (20) jusqu'à une extrémité opposée dudit collecteur (34).

10. Échangeur de chaleur (2) selon l'une des revendications 8 et 9, **caractérisé en ce que** le distributeur (32) et le collecteur (34) sont côte-à-côte suivant une étendue axiale de la face radialement interne (14, 14') ou externe (16, 16') de la zone d'échange thermique (3) comprenant l'arrivée d'huile (18) et la sortie d'huile (20).

11. Échangeur de chaleur (2) selon l'une des revendications 1 à 10, **caractérisé en ce que** la hauteur totale radiale (Z) de la zone d'échange thermique (3) augmente d'amont en avant, et le passage d'air axial comprend des canaux d'air (5) délimités par les surfaces d'échange thermique (6) et présentant des sections de passage augmentant d'amont en aval en correspondance avec la hauteur totale radiale (Z) de la zone d'échange thermique (3) et préférentiellement la hauteur totale radiale (Z) de la zone d'échange thermique (3) et/ou les sections des canaux d'air (5) augmentent d'amont en aval sur au moins 70% d'une étendue totale axiale de ladite zone d'échange thermique (3).

12. Échangeur de chaleur (2) selon la revendication 11, **caractérisé en ce que** l'augmentation de la hauteur totale radiale (Z) de la zone d'échange thermique (3) et/ou l'augmentation des sections des canaux d'air (5) est monotone et/ou d'au moins 30%.

13. Échangeur de chaleur (2) selon l'une des revendications 11 et 12, **caractérisé en ce que** les sections des canaux d'air (5) présentent une forme polygonale, préférentiellement pentagonale.

14. Échangeur de chaleur (2) selon l'une des revendications 1 à 13, **caractérisé en ce que** la zone d'échange thermique (3) comprend les portions aller (26, 26') et les portions retour (28, 28') s'étendant radialement et réparties le long du profil en arc de cercle, et comprenant les surfaces d'échange thermique (6) étant formées par des parois transversales s'étendant entre les portions aller (26, 26') et/ou les portions retour (28, 28') et préférentiellement les canaux d'air (5) entre chaque paire de portions aller (26, 26') et portions retour (28, 28') voisines forment au moins deux rangées radiales de polygones, préférentiellement de pentagone, imbriqués.

15. Échangeur de chaleur (2) selon la revendication 14, **caractérisé en ce que** les parois transversales sont intégralement formées avec les portions aller (26, 26') ou avec les portions retour (28, 28').

## Patentansprüche

1. Wärmetauscher (2) vom Typ Luft/Öl, für einen ringförmigen Luftstrom einer Gasturbine, umfassend eine Wärmeaustauschzone (3) mit Ölübergängen (4, 4') und Wärmeübertragungsflächen (6) mit der Luft, wobei die Wärmeaustauschzone (3) einen axialen Luftstromkanal bildet und ein Profil gegenüber dem Luftstrom (F) aufweist, das in einer Ebene senkrecht zu diesem Luftstrom (F) liegt, wobei das Profil der Wärmeaustauschzone (3) kreisbogenförmig ist, um in den ringförmigen Luftstrom eingebaut werden zu können, wobei der Wärmetauscher (2) auf einer radial innenliegenden (14, 14') oder radial außenliegenden (16, 16') Fläche der Wärmeaustauschzone (3) einen Öleinlass (18) und einen Ölauslass (20) umfasst, wobei die Ölübergänge (4, 4') mehrere Strecken (22, 22') zwischen dem Öleinlass (18) und dem Ölauslass (20) umfassen, die entlang des kreisförmigen Profils der Wärmeaustauschzone (3) verteilt sind, wobei jede der Strecken (22, 22') mindestens eine Hinwegportion (26, 26') und mindestens eine Rückwegportion (28, 28') umfasst, die sich radial zwischen der radial innenliegenden (14, 14') und der radial außenliegenden (16, 16') Fläche erstrecken, wobei der Wärmetauscher **dadurch gekennzeichnet ist, dass** jede Hinwegportion (26, 26') und jede Rückwegportion (28, 28') jeder Strecke (22, 22') entlang des kreisförmigen Profils der Wärmeaustauschzone (3) versetzt sind.

2. Wärmetauscher (2) nach Anspruch 1, **dadurch gekennzeichnet, dass** jede der Strecken (22, 22') mindestens eine Verbindungsportion (30, 30') umfasst, die die mindestens eine Hinwegportion (26, 26') mit der mindestens einen Rückwegportion (28, 28') verbindet und in der Wärmeaustauschzone (3) angeordnet ist.

3. Wärmetauscher (2) nach einem der Ansprüche 1 und 2, **dadurch gekennzeichnet, dass** jede Hinwegportion (26), Rückwegportion (28) und Verbindungsportion (30) jeder Strecke (22) sich über die gesamte axiale Länge der Wärmeaustauschzone (3) erstrecken.

4. Wärmetauscher (2) nach Anspruch 3, **dadurch gekennzeichnet, dass** jede Strecke (22) mehrere parallele Ölübergänge (4) umfasst, die über die gesamte axiale Länge der Wärmeaustauschzone (3) verteilt sind.

5. Wärmetauscher (2) nach einem der Ansprüche 1 und 2, **dadurch gekennzeichnet, dass** jede Hinwegportion (26') und jede Rückwegportion (28') jeder Strecke (22') mehrere parallele Ölübergänge (4') umfassen, die ein doppelt gekrümmtes Strömungsprofil mit einem ersten radialen Abschnitt (36), einem zweiten axialen Abschnitt (38) und einem dritten radialen Abschnitt (40) bilden.

6. Wärmetauscher (2) nach den Ansprüchen 2 und 5, **dadurch gekennzeichnet, dass** die mindestens eine Verbindungsportion (30') die ersten (36) oder dritten radialen Abschnitte (40) verbindet, die an die Verbindungsportion (30') angrenzen.

7. Wärmetauscher (2) nach einem der Ansprüche 5 und 6, **dadurch gekennzeichnet, dass** die zweiten axialen Abschnitte (38) der Hinwegportionen (26') und Rückwegportionen (28') entgegengesetzte Strömungsrichtungen aufweisen.

8. Wärmetauscher (2) nach einem der Ansprüche 1 bis 7, umfassend auf der radial innenliegenden Fläche (14, 14') oder der radial außenliegenden Fläche (16, 16') der Wärmeaustauschzone (3) einen Öleinlass (18) und einen Ölauslass (20), außerdem einen Verteiler (32), der fluidisch zwischen dem Öleinlass (18) und den Strecken (22, 22') angeordnet ist und sich entlang dem kreisbogenförmigen Profil erstreckt, sowie einen Sammelbehälter (34), der fluidisch zwischen den Strecken (22, 22') und dem Ölauslass (20) angeordnet ist und sich entlang dem kreisbogenförmigen Profil erstreckt, vorzugsweise ist der Öleinlass (18) an einem Ende des Verteilers (32) entlang dem kreisbogenförmigen Profil, und der Verteiler weist einen Durchgangsquerschnitt zu dem kreisbogenförmigen Profil auf, der sich entlang dem kreisbogenförmigen Profil von dem Öleinlass (18) bis zu einem gegenüberliegenden Ende des Verteilers (32) allmählich verjüngt.

9. Wärmetauscher (2) nach Anspruch 8, **dadurch gekennzeichnet, dass** der Ölauslass (20) an einem Ende des Sammelbehälters (34) entlang dem kreisbogenförmigen Profil angeordnet ist und der Sammelbehälter (34) einen Durchgangsquerschnitt zu dem kreisbogenförmigen Profil aufweist, der sich entlang dem kreisbogenförmigen Profil von dem Ölauslass (20) bis zu einem gegenüberliegenden Ende des Sammelbehälters (34) allmählich verjüngt.

10. Wärmetauscher (2) nach einem der Ansprüche 8 und 9, **dadurch gekennzeichnet, dass** der Verteiler (32) und der Sammelbehälter (34) nebeneinander entlang einer axialen Länge der radial innenliegenden (14, 14') oder radial außenliegenden (16, 16') Fläche der Wärmeaustauschzone (3) angeordnet sind, die den Öleinlass (18) und den Ölauslass (20) umfasst.

11. Wärmetauscher (2) nach einem der Ansprüche 1 bis 10, **dadurch gekennzeichnet, dass** die Gesamtradialhöhe (Z) der Wärmeaustauschzone (3) von vorne nach hinten zunimmt und der axiale Luftstromkanal Luftkanäle (5) umfasst, die durch die Wärmeübertragungsflächen (6) begrenzt werden und Durchgangsquerschnitte aufweisen, die entsprechend der Gesamtradialhöhe (Z) der Wärmeaustauschzone (3) von vorne nach hinten zunehmen, und vorzugsweise die Gesamtradialhöhe (Z) der Wärmeaustauschzone (3) und/oder die Querschnitte der Luftkanäle (5) von vorne nach hinten über mindestens 70 % einer gesamten axialen Länge der Wärmeaustauschzone (3) zunehmen.

12. Wärmetauscher (2) nach Anspruch 11, **dadurch gekennzeichnet, dass** die Zunahme der Gesamtradialhöhe (Z) der Wärmeaustauschzone (3) und/oder die Zunahme der Querschnitte der Luftkanäle (5) monoton und/oder mindestens 30 % beträgt.

13. Wärmetauscher (2) nach einem der Ansprüche 11 und 12, **dadurch gekennzeichnet, dass** die Abschnitte der Luftkanäle (5) eine polygonale Form, vorzugsweise eine fünfeckige Form, aufweisen.

14. Wärmetauscher (2) nach einem der Ansprüche 1 bis 13, **dadurch gekennzeichnet, dass** die Wärmeaustauschzone (3) die radial erstreckenden Hinwegportionen (26, 26') und Rückwegportionen (28, 28') umfasst, die entlang dem kreisbogenförmigen Profil verteilt sind, und dass die Wärmeübertragungsflächen (6) durch Querwände gebildet werden, die sich zwischen den Hinwegportionen (26, 26') und/oder Rückwegportionen (28, 28') erstrecken, wobei die Luftkanäle (5) zwischen jeder benachbarten Paarung von Hinwegportionen (26, 26') und Rückwegportionen (28, 28') mindestens zwei radiale Reihen von Polygonen, vorzugsweise Fünfecken, bilden.

15. Wärmetauscher (2) nach Anspruch 14, **dadurch gekennzeichnet, dass** die Querwände integral mit den Hinwegportionen (26, 26') oder mit den Rückwegportionen (28, 28') gebildet sind.

## Claims

1. A heat exchanger (2) of the air/oil type for an annular air vein of a turbomachine, comprising a heat exchange zone (3) with oil passages (4, 4') and heat exchange surfaces (6) with the air, said heat exchange zone (3) forming an axial air passage and having an arcuate profile relative to the air flow (F) and lying in a plane perpendicular to said air flow (F), said profile of the heat exchange zone (3) being arcuate in order to be disposed in the annular air vein, said heat exchanger (2) comprising, on a radially internal face (14, 14') or external face (16, 16') of the heat exchange zone (3), an oil inlet (18) and an oil outlet (20), the oil passages (4, 4') comprising several paths (22, 22') between said oil inlet (18) and said oil outlet (20), distributed along the arcuate profile of the heat exchange zone (3), each of the paths (22, 22') comprising at least one forward portion (26, 26') and at least one return portion (28, 28'), extending radially between the radially internal face (14, 14') and the radially external face (16, 16'), said heat exchanger being **characterized in that** each forward portion (26, 26') and each return portion (28, 28') of each of the paths (22, 22') are offset along the arcuate profile of the heat exchange zone (3).

2. The heat exchanger (2) according to claim 1, **characterized in that** each of the paths (22, 22') comprises at least one connection portion (30, 30') connecting the at least one forward portion (26, 26') to the at least one return portion (28, 28') and disposed in the heat exchange zone (3).

3. The heat exchanger (2) according to any one of claims 1 and 2, **characterized in that** each of the forward portions (26), return portions (28), and connection portions (30) of each of the paths (22) extends over a total axial length of the heat exchange zone (3).

4. The heat exchanger (2) according to claim 3, **characterized in that** each path (22) comprises several parallel oil passages (4) distributed over the total axial length of the heat exchange zone (3).

5. The heat exchanger (2) according to any one of claims 1 and 2, **characterized in that** each forward portion (26') and each return portion (28') of each of the paths (22') comprises several parallel oil passages (4') forming a double-bent flow profile with a first radial part (36), a second axial part (38), and a third radial part (40).

6. The heat exchanger (2) according to claims 2 and 5, **characterized in that** the at least one connection portion (30') connects together adjacent first radial parts (36) or third radial parts (40) adjacent to said connection portion (30').

7. The heat exchanger (2) according to any one of claims 5 and 6, **characterized in that** the second axial parts (38) of the forward portions (26') and return portions (28') have opposite flow directions.

8. The heat exchanger (2) according to any one of claims 1 to 7, comprising on the radially internal face (14, 14') or the radially external face (16, 16') of the heat exchange zone (3) comprising the oil inlet (18) and the oil outlet (20), further comprising a distributor (32) fluidically disposed between the oil inlet (18) and the paths (22, 22') and extending along the arcuate profile, and a collector (34) fluidically disposed between the paths (22, 22') and the oil outlet (20) and extending along the arcuate profile, and preferably the oil inlet (18) is at one end of the distributor (32) following the arcuate profile, and said distributor presents a transverse passage cross-section relative to said arcuate profile which progressively decreases along said arcuate profile from the oil inlet (18) to an opposite end of said distributor (32).

9. The heat exchanger (2) according to claim 8, **characterized in that** the oil outlet (20) is at one end of the collector (34) following the arcuate profile, and said collector (34) presents a transverse passage cross-section relative to said arcuate profile which progressively decreases along said arcuate profile from the oil outlet (20) to an opposite end of said collector (34).

10. The heat exchanger (2) according to any one of claims 8 and 9, **characterized in that** the distributor (32) and the collector (34) are side-by-side following an axial extent of the radially internal face (14, 14') or external face (16, 16') of the heat exchange zone (3) comprising the oil inlet (18) and the oil outlet (20).

11. The heat exchanger (2) according to any one of claims 1 to 10, **characterized in that** the total radial height (Z) of the heat exchange zone (3) increases from upstream to downstream, and the axial air passage comprises air channels (5) delimited by the heat exchange surfaces (6) and presenting passage sections increasing from upstream to downstream in correspondence with the total radial height (Z) of the heat exchange zone (3), and preferably the total radial height (Z) of the heat exchange zone (3) and/or the sections of the air channels (5) increase from upstream to downstream over at least 70% of a total axial extent of said heat exchange zone (3).

12. The heat exchanger (2) according to claim 11, **characterized in that** the increase of the total radial height (Z) of the heat exchange zone (3) and/or the increase of the sections of the air channels (5) is monotonic and/or at least 30%.

13. The heat exchanger (2) according to one of claims 11 and 12, **characterized in that** the sections of the air channels (5) have a polygonal shape, preferably pentagonal.

14. The heat exchanger (2) according to one of claims 1 to 13, **characterized in that** the heat exchange zone (3) includes the forward portions (26, 26') and return portions (28, 28') extending radially and distributed along the arcuate profile, and including the heat exchange surfaces (6) formed by transverse walls extending between the forward portions (26, 26') and/or the return portions (28, 28') and preferably the air channels (5) between each pair of neighboring forward portions (26, 26') and return portions (28, 28') form at least two radial rows of polygons, preferably pentagons, nested together.

15. The heat exchanger (2) according to claim 14, **characterized in that** the transverse walls are integrally formed with the forward portions (26, 26') or with the return portions (28, 28').
